# EUROPEAN PATENT APPLICATION

(11) **EP 1 783 399 A1**
(43) Date of publication of application: **09.05.2007**
(21) Application number: 06020764.4
(22) Date of filing: 02.10.2006
(51) Int. Cl.: F16H 7/08

(54) **Tensioner mounting structure and initial position setting device**

(30) Priority: 30.09.2005 JP 2005287758
(71) Applicant: Daido Kogyo Co., Ltd., Kaga-shi Ishikawa, 922-8686 (JP)
(72) Inventor: Yamada, Akira Daido Kogyo Co., Ltd., Kaga-shi Ishikawa, 922-8686 (JP); Hamano, Hitoshi Daido Kogyo Co., Ltd., Kaga-shi Ishikawa, 922-8686 (JP)
(74) Representative: Vossius & Partner

(57) **Abstract**

The invention provides a tensioner initial position setting device for a tensioner (1) having a housing (2), a plunger (3) slidably mounted within the housing, and shoes (4) mounted opposite the bottom of the plunger and the top of the housing, wherein it further including concave grooves or penetration holes formed on both lateral sides of each shoe, and a set wire inserted into said concave grooves or holes with both ends of said set wire tied together, thereby preventing the plunger from projecting. The tensioner initial position setting device can easily release an initial position of a tensioner mounted in a limited space in a state in which an initial position is set so as to prevent the plunger from projecting.

## Description

The present invention relates to a mounting structure for a tensioner for preventing slack in a drive chain, and to a device to set an initial position of a plunger thereof.

In a chain composed of a plurality of connected links wound around sprockets to transmit power, the connecting portions of the links experience frictional wear, causing the chain to slacken. In the case of a roller chain exposed so as to drive the rear wheel of a two-wheeled motor vehicle, this slack can be absorbed by adjusting the position of the sprockets. However, in the case of a timing chain or the like for driving a cam that is used inside an engine, a tensioner device is provided to prevent flapping of the chain attendant upon slackening as well as the hypertension that accompanies flapping.

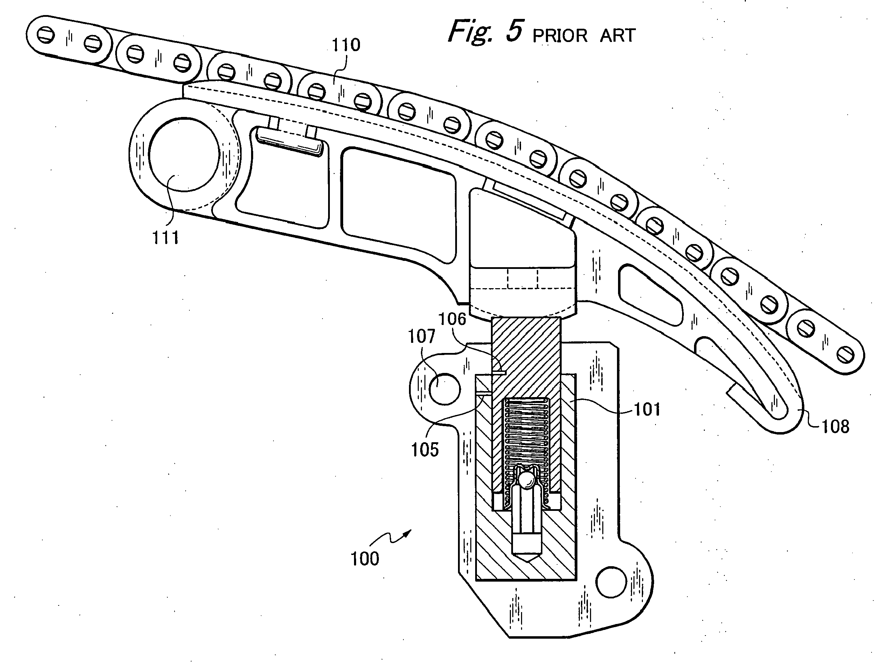

FIGS. 5-7 show a conventional ordinary tensioner 100, including a housing 101 and a plunger 102 slidably mounted in the housing. When hydraulic fluid is supplied to a fluid chamber 109, the combined action of the pressure of the oil so supplied and a coil spring 104 built into the fluid chamber 109 pushes the plunger 102 out. This protrusion of the plunger 102 in turn lifts a tensioner lever 108 that pivots axially about a pivot 111, so as to supply the appropriate amount of tension to the slack chain 110. Conversely, in a case in which a large amount of tension is exerted on the chain 110 due to some impact, a check valve closes to prevent the plunger 102 from retreating. In this manner an appropriate tension is constantly exerted on the chain 110.

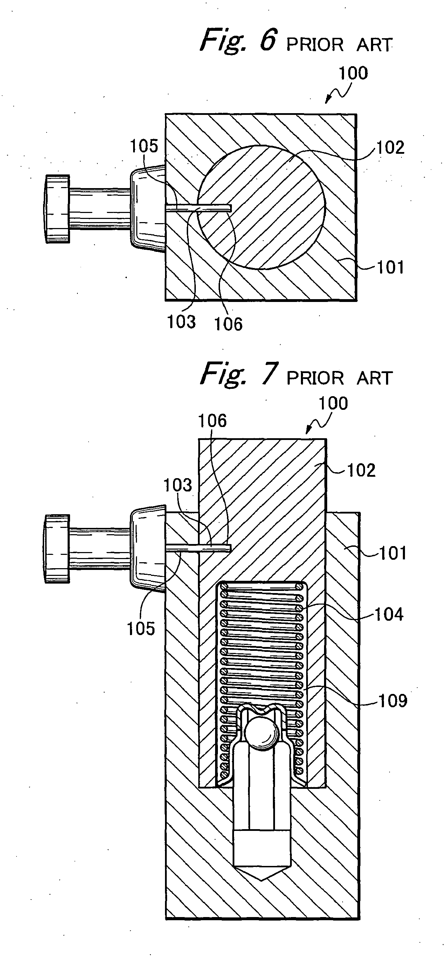

However, although the tensioner 100 is fixedly mounted on the engine by screws inserted in two mounting holes 107, 107, at this time the tensioner 100 is installed on the engine in a state in which the above-described plunger 102 is retracted. As a result, as shown in FIGS. 6 and 7, the plunger 102 is locked in place by a stopper pin 103 so as not to protrude beyond the tensioner housing 101. Specifically, a pin penetration hole 105 is formed in the housing 101 that comprises the main unit of the tensioner 100 and the plunger 102 has a pin-locking groove 106 that aligns with the pin penetration hole 105 when the plunger 102 is fully inserted into the housing 101.

When this type of tensioner 100 is installed on an engine, the plunger 102 is pushed into the housing 101, the pin penetration hole 105 is lined up with the pin locking groove 106 and the stopper pin 103 is inserted into the pin penetration hole 105 to fix the plunger 102 in place in the housing 101. In other words, the initial position of the plunger is set.

JP-A-2001-153194 discloses an automatic tensioner entitled "Tensioner with Plunger Locking Mechanism" that, in order to insert the stopper pin for locking the plunger in place inside the housing in a retracted state, provides an annular pin locking groove circumferentially around the periphery of the plunger that contacts a lateral side surface of the stopper pin and engages the pin as well as a pin penetration hole made in the housing. The plunger is locked in place by a stopper pin inserted into the pin penetration hole contacting the bottom of the annular pin-locking groove.

In addition, JP-A-H08-004861 discloses an "Automatic Tensioner" that, in order to insert the stopper pin for locking the plunger in place inside the housing in a retracted state, provides a penetration hole in the plunger and forms pin holes in two opposed lateral sides of a cylinder, such that, by aligning one pin hole on one lateral side of the cylinder, the penetration hole in the plunger and the other pin hole in the other lateral side and inserting the stopper pin through the holes, the stopper pin comes loose with difficulty, and further, modifies the shape of the pin hole on the side from which the stopper pin is inserted so as somewhat to facilitate the insertion of the stopper pin.

However, in the case of an engine in which the distance between the two camshafts is small and there is not enough space to install a tensioner, it is difficult to use the conventional tensioner described above. Specifically, the restricted space makes it difficult to convert an arrangement that uses a gear as the means of linking the two camshafts of an engine that is already in production to a chain-drive type of structure.

With an engine of this type, in which the tensioner must fit into a confined space, there is virtually no extra space with which to work, and since a push-down tensioner is involved the walls of the engine block extend well along both front and rear sides of the tensioner, so that even if the engine head cover is removed to install the tensioner only the chain and the top of the tensioner can be seen. Therefore, a pin inserted so as to set the initial position of the plunger of the tensioner cannot be removed once the tensioner is installed.

Accordingly, it is an object of the present invention to solve problems like those described above, in an engine in which the distance between the camshafts is short and there is not enough space to mount a tensioner as described above, and to provide a tensioner initial position setting device and tensioner mounting structure that can easily release the setting of the initial position of a tensioner that is mounted in a confined space in a state in which the plunger is set at an initial position in which the plunger does not project from the tensioner.

To achieve the above-described object of the present invention, the present invention provides a tensioner initial position setting device for a tensioner comprising a housing, a plunger slidably mounted within said housing, and shoes mounted opposite the bottom of said plunger and the top of said housing, wherein it further comprises concave grooves or penetration holes formed on both lateral sides of each shoe; and a set wire inserted into said concave grooves or holes with both ends of said set wire tied together, thereby preventing the plunger from projecting.

Preferably, concave grooves or holes that communicate with said concave grooves or holes in said shoes are formed in said housing and the set wire is also inserted in the concave grooves or holes in the housing.

In addition, the above-described object of the present invention is also achieved by a tensioner mounting structure for a tensioner comprising a housing, a plunger slidably mounted within said housing, shoes mounted opposite the bottom of said plunger and the top of the housing, and a return spring contained in the housing that biases said plunger in a projecting direction, the tensioner applying tension to a chain wound around both sprockets of an engine, wherein it further comprises concave grooves or penetration holes formed on both lateral sides of each shoe; and a set wire inserted into said concave grooves or holes with both ends of the set wire tied together so as to prevent the plunger from projecting, the tensioner being mounted on an engine body in a space thereof with a bolt inserted into a hole in a mounting flange that extends from a lateral side part of the housing.

The tensioner of the present invention mounts shoes at the tip of the housing and the tip of the plunger, and the plunger is restrained by a wire so that the plunger is not projected by the action of a spring force of a built-in coil spring. Specifically, in a state in which the plunger is restrained by a wire the tensioner is installed on the body of the engine, and, after the tensioner is installed at a predetermined position, the wire is cut and can be removed. Therefore, even with an engine in which the space in which to install the tensioner is limited, the wire can be removed using the slight space above the tensioner. As a result, the plunger protrudes, applying a predetermined tension to the chain.

Other features and advantages of the present invention will be apparent from the following description when taken in conjunction with the accompanying drawings, in which like reference characters designate the same or similar parts throughout the figures thereof.

The accompanying drawings, which are incorporated in and constitute a part of the specification, illustrate embodiments of the invention and, together with the description, serve to explain the principles of the invention.
FIGS. 1A, 1B and 1C show a plan view of a tensioner according to an embodiment of the present invention, a front view along a line 1B-1B of the tensioner shown in FIG 1A, and a right lateral side view of the tensioner, respectively;
FIGS. 2A, 2B and 2C show plan, front and lateral side views of a housing of the tensioner, respectively;
FIGS. 3A, 3B and 3C show a plan view, a front view and a sectional view along a line 3C-3C shown in FIG 3B of the tensioner, respectively;
FIG. 4 shows a plan view of a use state of the tensioner;
FIG. 5 shows a partial vertical sectional view of a use state of a conventional tensioner;
FIG 6 shows a horizontal sectional view of the essential parts of the conventional tensioner; and
FIG 7 shows a vertical sectional view of the essential parts of the conventional tensioner.

A detailed description will now be given of a preferred embodiment of the present invention, with reference to the accompanying drawings.

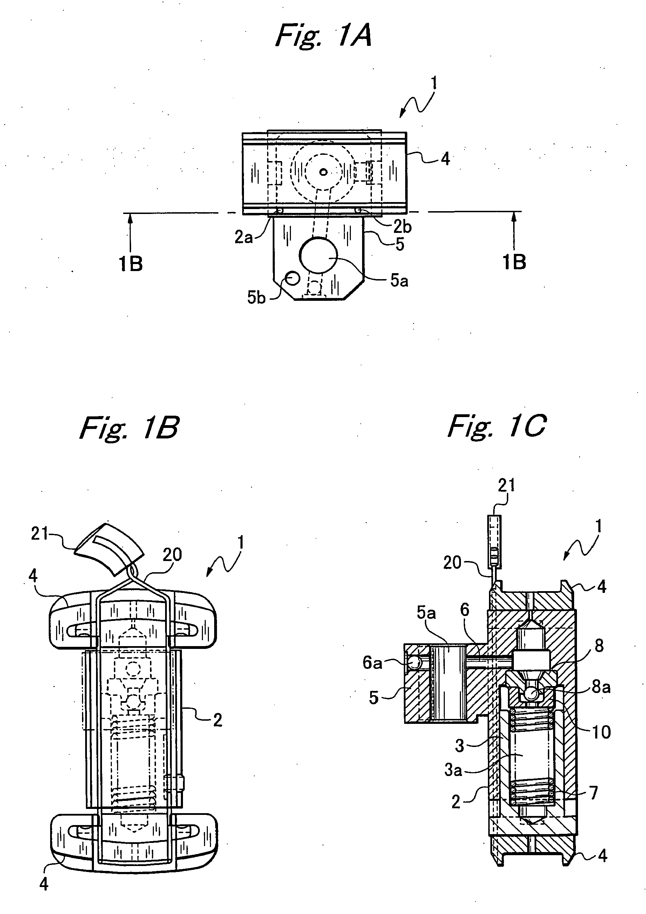

As shown in FIGS. 1A-1C, a tensioner 1 equipped with an initial position setting device according to an embodiment of the present invention comprises a housing 2, a plunger 3 slidably mounted within the housing, and shoes 4 mounted on the top of the housing 2 and the bottom of the plunger 3.

The housing 2 has a mounting flange 5 extended from a lateral portion of the housing 2 and integrated into the housing 2 as a single unit, and a bolt hole 5a is formed in the mounting flange 5. Although the tensioner 1 is fixedly mounted on an engine body via the mounting flange 5, the mounting flange 5 also engages a notched part formed in the engine body and a bolt is inserted into and through this bolt hole 5a, which penetrates the mounting flange 5 vertically, and the bolt engaged so as to fixedly attach the tensioner 1 to the engine body. Then, a knock-pin hole 5b is provided on a corner of the mounting flange 5 so as to penetrate the mounting flange 5. A knock-pin is inserted into the knock-pin hole 5b to position the tensioner.

Referring to the operation of the tensioner 1, a hydraulic fluid that flows in through a fluid path inside the bolt makes its way through an oil intake port 6 and into a fluid chamber 3a in the plunger 3. Specifically, although the tensioner 1 is fixedly mounted on the engine by the insertion of a bolt into the bolt hole 5a provided in the mounting flange 5, a hole that forms a flow path is formed in the longitudinal axis of the bolt and a groove is formed in the outer periphery of the bolt, and the hole and the groove communicate with each other.

Here, since the groove is provided at the same height as the oil intake port 6 when the bolt is tightened, the hydraulic fluid that flows in from the tip of the bolt to the flow path is directed to the oil intake port 6. However, since the side opposite the oil intake port 6 is closed off by a ball plug 6a, the hydraulic fluid does not leak from the mounting flange 5. Of course, as can be understood by those skilled in the art, the tensioner 1 of the present invention does not limit the fluid supply means to that shown in the embodiment shown in FIGS. 1A-1C.

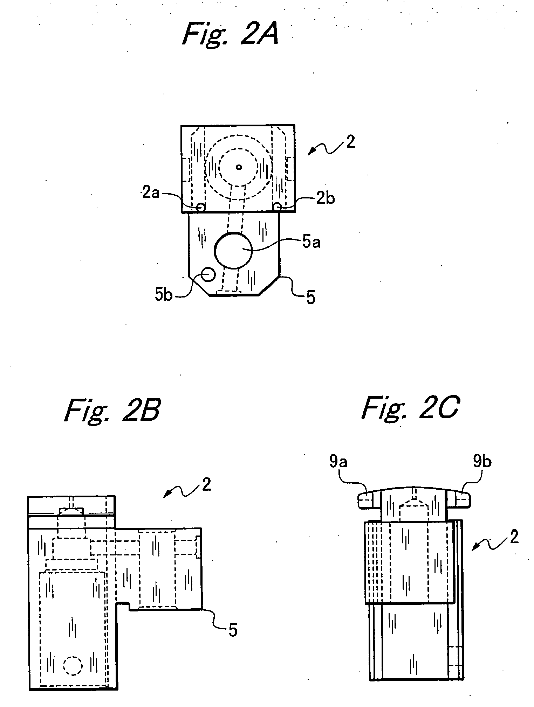

A return spring 7 is contained within the fluid chamber 3a of the plunger 3 that provides a spring force that biases the plunger 3 downward. Shoes are mounted on the top end of the housing 2 and the bottom end of the plunger 3, respectively. As shown in isolation in FIG. 2C, armatures 9a, 9b are formed on the top end of the housing 2. The shoe 4 is mounted on the top end of the housing 2 using these armatures 9a, 9b.

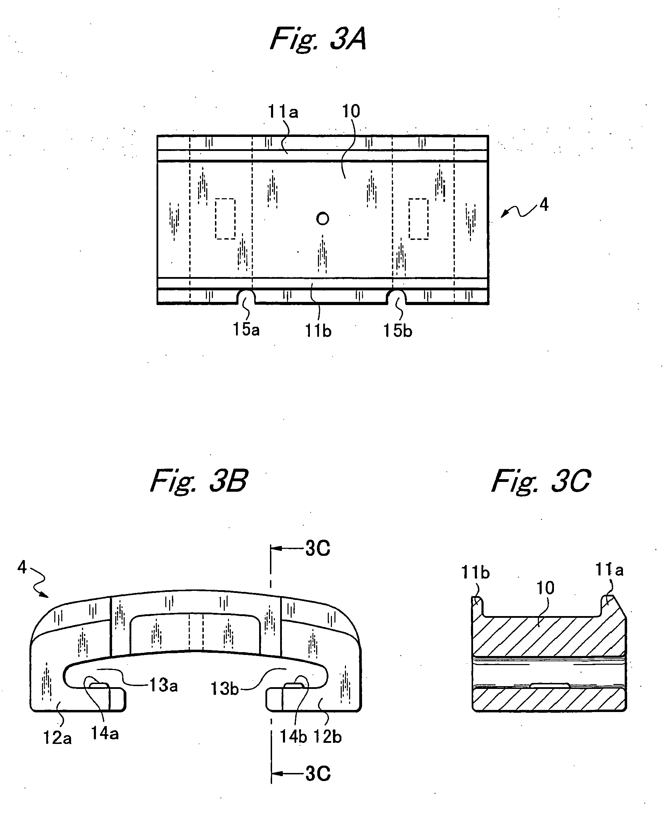

As shown in FIGS. 3A-3C, the shoes 4 are roughly C-shaped, with guide ridges 11a, 11 b projecting from proximal and distal ends of a slide surface that a chain contacts and along which the chain slides, as well as engaging grooves 13a, 13b formed between arms 12a, 12b provided along both lateral sides. The armatures 9a, 9b formed along both lateral sides on the top end of the housing 2 engage these shoe engaging grooves 13a, 13b, thus mounting the shoe 4 on the housing 2. Convex parts 14a, 14b that protrude from upper surfaces of the arms 12a, 12b engage concave parts formed on lower surfaces of the armatures 9a, 9b to hold the shoe 4 in place so that it does not separate from the housing 2. A shoe 4 is similarly mounted on the tip of the plunger 3 described above, and the mounting structure used is the same as that for the housing 2 just described.

Incidentally, holes 2a, 2b that penetrate the housing 2 vertically are formed along both lateral sides of the housing 2 and concave grooves 15a, 15b are formed at positions corresponding to the shoe guide ridge 11 b. A set wire 20 is mounted inside the holes 2a, 2b and the concave grooves 15a, 15b. Specifically, as shown in FIG 1A-1C, the set wire 20 is inserted into through holes 2a, 2b provided along both lateral sides of the housing 2 and into the concave grooves 15a, 15b formed by notching guide ridges 21 b of both upper and lower shoes 4, 4, with the two ends of the set wire 20 tied together by a sleeve 21. This set wire 20 prevents the plunger 3 from projecting when the tensioner 1 is mounted on the engine.

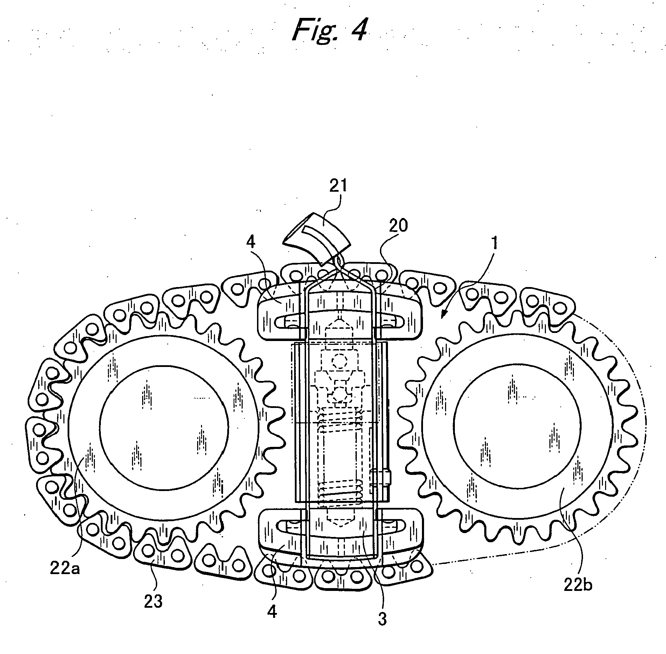

The tensioner 1 having the structure described above is of a structure that permits mounting in a confined space in a state in which the plunger 2 is restricted by the set wire 20, in which, after mounting, the set wire can be cut and pulled out. FIG. 4 shows a mounted state of the tensioner 1, in which the mounting flange 5 is set into a notch formed in the engine body and fixed in place with a bolt. Although there is space between the two sprockets 22a, 22b of the engine body, it is confined to a narrow area in which the front and rear sides (proximal and distal sides) of the tensioner 1 close to the wall surfaces of the engine body, with the shoes 4 mounted on the tips of the housing 2 and the plunger 3 contained within the engine block in such a way that the face of the shoe 4 at the top of the housing 2 can just be seen over the wall of the engine block.

However, the sleeve 21 that ties together the two ends of the set wire 20 mounted on the tensioner 1 is stuck out therefrom and accessible. If a portion of the set wire 20 is cut and the sleeve 21 simultaneously pulled, the set wire is removed. As a result, the plunger 3 is biased by the return spring 7 and protrudes, and a predetermined tension can be imparted to the chain 23. In this case, shoes 4 are mounted on both top and bottom ends of the tensioner 1, and by the projection of the plunger 3 a predetermined tension is imparted to the chain 23 that is wound around the sprockets. Specifically, when the chain 23 slackens, the biasing force of the return spring 7 causes the plunger 3 to project so that an appropriate tension is constantly exerted on the chain 23.

When for some reason a large load is exerted on the chain 23, the plunger 3 attempts to retreat. However, because the hydraulic fluid that fills the fluid chamber is prevented from draining by the action of a ball 8a atop a ball seat 8 that functions as a check valve, the plunger is prevented from retreating.

As many apparently widely different embodiments and variations of the present invention can be made without departing from the spirit and scope thereof, it is to be understood that the present invention is not limited to the specific embodiments thereof described herein but rather only to the extent set forth in the following claims.

## Claims

1. A tensioner initial position setting device for a tensioner (1) comprising a housing (2), a plunger (3) slidably mounted within said housing, and shoes (4) mounted opposite the bottom of said plunger and the top of said housing,
**characterized in that**:
the device further comprises concave grooves (15a, 15b) or penetration holes formed on both lateral sides of each shoe; and
a set wire (20) inserted into said concave grooves or holes with both ends of said set wire tied together, thereby preventing the plunger from projecting.

2. The tensioner initial position setting device according to claim 1, wherein concave grooves (15a, 15b) or holes that communicate with said concave grooves or holes in said shoes (4) are formed in said housing (2) and the set wire (20) is also inserted in the concave grooves or holes in the housing.

3. A tensioner mounting structure for a tensioner (1) comprising a housing (2), a plunger (3) slidably mounted within said housing, shoes (4) mounted opposite the bottom of said plunger and the top of the housing, and a return spring (7) contained in the housing that biases said plunger in a projecting direction, the tensioner (1) applying tension to a chain (23) wound around both sprockets (22a, 22b) of an engine, **characterized in that**:
the structure further comprises concave grooves (15a, 15b) or penetration holes formed on both lateral sides of each shoe; and
a set wire (20) inserted into said concave grooves or holes with both ends of the set wire tied together so as to prevent the plunger (3) from projecting,
the tensioner (1) being mounted on an engine body in a space thereof with a bolt inserted into a hole (5a) in a mounting flange (5) that extends from a lateral side part of the housing (2).
